Europäisches Patentamt

European Patent Office

Office européen des brevets

(19)

(11) Veröffentlichungsnummer: **0 118 713**
**A2**

(12) **EUROPÄISCHE PATENTANMELDUNG**

(21) Anmeldenummer: **84100978.0**

(22) Anmeldetag: **01.02.84**

(51) Int. Cl.³: **B 01 D 53/34**

(30) Priorität: **12.02.83 DE 3304976**

(43) Veröffentlichungstag der Anmeldung:
**19.09.84 Patentblatt 84/38**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Lailach, Günther, Dr.**
**Bodelschwinghstrasse 23**
**D-4150 Krefeld(DE)**

(72) Erfinder: **Gerken, Rudolf, Dr.**
**Rather Strasse 79**
**D-4150 Krefeld-Traar(DE)**

(72) Erfinder: **Klaeren, Aloys, Dr.**
**Bärenstrasse 12**
**D-4150 Krefeld-Traar(DE)**

(54) **Verfahren zur Entfernung von Schwefeldioxid aus Abgasen.**

(57) Die vorliengende Erfindung betrifft ein Verfahren zur Entfernung von Schwefeldioxid aus Abgasen durch katalytische Umsetzung des Schwefeldioxides mit Sauerstoff und Wasser an Aktivkohle, wobei Aktivkohle einer Korn-größe von 0,3 bis 3,5 mm verwendet wird.

EP 0 118 713 A2

0118713

BAYER AKTIENGESELLSCHAFT          5090 Leverkusen, Bayerwerk

Konzernverwaltung RP
Patentabteilung          St/ABc


**Verfahren zur Entfernung von Schwefeldioxid aus Abgasen**

Die Erfindung betrifft ein Verfahren zur Entfernung von Schwefeldioxid aus sauerstoffhaltigen Abgasen durch katalytische Umsetzung des Schwefeldioxids mit Sauerstoff und Wasser an Aktivkohle zu Schwefelsäure.

Schwefeldioxid muß aus Gründen des Umweltschutzes aus Abgasen entfernt werden. Dies kann geschehen, indem man die Schwefeldioxid-haltigen Abgase durch eine feuchte Aktivkohleschüttung bei Temperaturen zwischen 50 und 90°C strömen läßt, wobei ein wesentlicher Teil des Schwefeldioxids durch die Reaktion mit Sauerstoff und Wasser zu Schwefelsäure umgesetzt werden kann. Diese kann dann kontinuierlich oder periodisch aus der Aktivkohle ausgewaschen werden. Da dabei die Schwefelsäure aber nur in einer Konzentration von nur maximal 50 % anfällt, gibt es für sie kaum eine Verwertbarkeit. Durch die Kosten dieser Reinigung wird das abgaserzeugende Verfahren stark belastet.


Le A 22 144 - Ausland

Die Kosten können dadurch gering gehalten werden, daß man bei geringem Druckverlust in der Aktivkohleschüttung eine hohe Raum-Zeit-Ausbeute erzielt. Gebräuchlich dafür sind gebrochene Aktivkohlen (DE-C 2 430 909 und DE-C 2 811 646) oder Formkohlen (FR-A 7 126 836), die aufgrund ihrer Korngrößenverteilung (1-3 mm) einen geringen Druckverlust erzeugen und aufgrund einer großen inneren Oberfläche eine hohe Raum-Zeit-Ausbeute erwarten lassen.

Ziel dieser Anmeldung ist es, dieses Verfahren kostengünstiger zu gestalten.

Überraschenderweise wurde nun gefunden, daß die innere Oberfläche der Aktivkohle keine wesentliche Rolle für die Raum-Zeit-Ausbeute spielt. Wird Aktivkohle einer gegebenen Qualität mit $SO_2$-haltigem Abgas einer bestimmten Temperatur durchströmt, so ändert sich die Raum-Zeit-Ausbeute etwa propotional zum Druckverlust, allein abhängig von der Korngrößenverteilung der Aktivkohle.

Erfindungsgemäß kann daher die Wirtschaftlichkeit des Abgasreinigungsverfahren wesentlich verbessert werden, indem relativ feinkörnige Aktivkohle mit hohem spezifischen Druckverlust, somit aber auch entsprechend hoher Raum-Zeit-Ausbeute, in die Reaktoren eingefüllt wird, wobei sich die Füllmenge nach dem erforderlichen Gesamtumsatz richtet.

Die vorliegende Erfindung betrifft somit ein Verfahren zur Entfernung von Schwefeldioxid aus Abgasen durch katalytische Umsetzung des Schwefeldioxides mit Sauer-

Le A 22 144

stoff und Wasser an Aktivkohle bei 50 bis 90°C, dadurch gekennzeichnet, daß Aktivkohle mit einer Korngröße zwischen 0,3 und 2,5 mm verwendet wird.

Besonders gute Resultate werden erzielt, wenn Aktivkohle eingesetzt wird, deren Korngröße zu mindestens etwa 90 % zwischen 0,5 und 1,6 mm liegt.

Beim erfindungsgemäßen Verfahren ist nur etwa die halbe Füllmenge gegenüber Aktivkohle mit Korngrößen von 1-3 mm erforderlich. Da die Aktivkohlefüllung einen wesentlichen Kostenfaktor derartiger Abgasreinigungsanlagen darstellt, kann die Wirtschaftlichkeit durch Einsatz feinkörniger Kohlen, gegen deren Verwendung bisher wegen ihres höheren spezifischen Druckverlustes ein Vorurteil bestand, deutlich verbessert werden.

Der Vorteil der Erfindung soll durch folgende Beispiele verdeutlicht werden.

Le A 22 144

- 4 -

Beispiel 1

Aktivkohle "A" ist durch folgende Kenngrößen charakterisiert:

Benzolabsorptionsvermögen:

| | | | |
|---|---|---|---|
| Bz As | 0,9 | 37 |
| Bz As | 0,1 | 22 |

Iodaufnahme:

| | |
|---|---|
| IZ, mg/g | 850 |

Siebanalyse:

| Korngröße mm | Probe "A 1" Gew.-% | Probe "A 2" Gew.-% |
|---|---|---|
| > 3,15 | 0,1 | - |
| 2,5-3,15 | 2,6 | 0,6 |
| 2,0-2,5 | 18,6 | 6,2 |
| 1,6-2,0 | 54,2 | 23,5 |
| 1,0-1,6 | 22,3 | 65,0 |
| 0,5-1,0 | 1,6 | 4,5 |
| < 0,5 | 0,6 | 0,2 |

Die Kohle wurde in einen Versuchsreaktor mit 5,3 m$^2$ Anströmfläche eingefüllt. Durch Besprühen mit Wasser wurde der Feinstaub ausgewaschen. Anschließend wurde Abgas von oben nach unten durch die Kohlefüllung geleitet

Le A 22 144

und periodisch mit Wasser besprüht. Die abfließende Säure hatte eine Konzentration von etwa 10 %. Die Betriebsdaten für die Versuche mit den beiden Kornfraktionen sind in der folgenden Tabelle I zusammengefaßt.

TABELLE I

| | Probe "A1" | Probe "A2" |
|---|---|---|
| Aktivkohlefüllung: | | |
| kg | 1 150 | 700 |
| $m^3$ | 3,55 | 2,0 |
| Abgasstrom: | | |
| $m^3_n$/h | 1 500 | 1 500 |
| °C | 68 | 68 |
| vor Reinigung: g $SO_2/m^3_n$ | 3,0 | 3,0 |
| nach Reinigung: g $SO_2/m^3_n$ | 1,1 | 1,1 |
| Umsatz: | | |
| Gesamt kg $SO_2$h | 2,85 | 2,85 |
| bzw.auf A-Kohle kg $SO_2$/m3.h | 0,80 | 1,43 |
| " " " kg $SO_2$/t.h | 2,48 | 4,09 |
| Druckverlust mbar | 6,5 | 6,5 |

Beispiel 2

Aktivkohle "B" ist durch folgende Kenngrößen charakterisiert:
Benzolabsorptionsvermögen:

| Bz As | 0,9 | 27 |
|---|---|---|
| Bz As | 0,1 | 17 |

Le A 22 144

Iodaufnahme:

IZ, mg/g                  580

Siebanalyse:

| Korngröße mm | Probe "B 1" Gew.-% | Probe "B 2" Gew.-% |
|---|---|---|
| 3,15 | 2,2 | - |
| 2,5-3,15 | 3,1 | - |
| 2,0-2,5 | 44,3 | - |
| 1,6-2,0 | 33,0 | 1,4 |
| 1,0-1,6 | 16,9 | 54,8 |
| 0,5-1,0 | 0,4 | 42,2 |
| 0,5 | 0,1 | 1,6 |

Die Versuche mit beiden Kornfraktionen wurden analog Beispiel 1 durchgeführt. Die Betriebsdaten sind in der folgenden Tabelle I aufgeführt.

TABELLE II

| | Probe "B 1" | Probe "B 2" |
|---|---|---|
| Aktivkohlefüllung: | | |
| kg | 1 000 | 450 |
| $m^3$ | 3,2 | 1,6 |
| Abgasstrom: | | |
| $m^3_n$/h | 1 500 | 1 500 |
| °C | 68 | 68 |
| vor Reinigung g $SO_2/m^3_n$ | 4,0 | 4,4 |
| nach Reinigung g $SO_2/m^3_n$ | 0,95 | 0,95 |

Le A 22 144

Umsatz:

| | | | |
|---|---|---|---|
| Gesamt | kg $SO_2$/h | 4,58 | 5,18 |
| bez. auf A-Kohle | kg $SO_2$/m$^3$.h | 1,43 | 3,24 |
| "     "     " | kg $SO_2$/t.h | 4,58 | 11,51 |
| Druckverlust | mbar | 6,5 | 6,5 |

Die Versuchsergebnisse zeigen, daß entgegen dem bestehenden Vorurteil die feinkörnige Aktivkohle wesentliche Vorteile bietet. Ist der Druckverlust der Abgasreinigungsanlage die limitierende Größe, so können die Kosten durch geringeren Aktivkohleeinsatz gesenkt werden. Ist das Reaktorvolumen die limitierende Größe, kann die Raum-Zeit-Ausbeute durch Einsatz der feinkörnigen Aktivkohle entscheidend erhöht werden.

## Patentansprüche

1. Verfahren zur Entfernung von Schwefeldioxid aus Abgasen durch katalytische Umsetzung des Schwefeldioxides mit Sauerstoff und Wasser an Aktivkohle bei 50 bis 90°C, dadurch gekennzeichnet, daß Aktivkohle mit einer Korngröße zwischen 0,3 und 2,5 mm verwendet wird.

2. Verfahren entspr. Anspruch 1, dadurch gekennzeichnet, daß Aktivkohle eingesetzt wird, deren Korngröße zu mindestens etwa 90 % zwischen 0,5 und 1, 6mm liegt.

Le A 22 144